(19) Europäisches Patentamt

European Patent Office

Office européen des brevets

(11) **EP 2 272 275 B1**

(12) **EUROPEAN PATENT SPECIFICATION**

(45) Date of publication and mention
of the grant of the patent:
**08.06.2016 Bulletin 2016/23**

(51) Int Cl.:
*H04W 24/10* (2009.01)   *H04L 12/26* (2006.01)
*G01S 5/00* (2006.01)   *G01S 5/02* (2006.01)
*G01S 11/08* (2006.01)   *H04W 64/00* (2009.01)

(21) Application number: **08767221.8**

(22) Date of filing: **24.06.2008**

(86) International application number:
**PCT/SE2008/050755**

(87) International publication number:
**WO 2009/131507 (29.10.2009 Gazette 2009/44)**

(54) **METHOD FOR DETERMINING THE ROUND TRIP TIME**

VERFAHREN ZUR BESTIMMUNG DER GESAMTLAUFZEIT

PROCÉDÉ DE DÉTERMINATION DU TEMPS DE PROPAGATION ALLER-RETOUR

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **25.04.2008 US 47815 P**

(43) Date of publication of application:
**12.01.2011 Bulletin 2011/02**

(73) Proprietor: **Telefonaktiebolaget LM Ericsson
(publ)
164 83 Stockholm (SE)**

(72) Inventors:
• **KAZMI, Muhammad**
  **S-167 39 Bromma (SE)**
• **ISRAELSSON, Martin**
  **S-163 41 Spånga (SE)**
• **GERSTENBERGER, Dirk**
  **S-113 56 Stockholm (SE)**
• **WIGREN, Torbjörn**
  **S-756 53 Uppsala (SE)**
• **BALDEMAIR, Robert**
  **S-171 70 Solna (SE)**

(74) Representative: **Ericsson
Patent Development
Torshamnsgatan 21-23
164 80 Stockholm (SE)**

(56) References cited:
EP-A1- 1 209 938    EP-A1- 1 617 693
EP-A1- 1 641 302    EP-B1- 1 285 552

WO-A1-01/89254    KR-A- 20020 058 613

• **"3rd Generation Partnership Project;Technical Specification Group Radio Access Network;Services provided by the physical layer(Release 1999)", 3GPP DRAFT; 25302-370, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sophia Antipolis, France; 20010124, 24 January 2001 (2001-01-24), XP050117065, [retrieved on 2001-01-24]**
• **LAITINEN H ET AL: "CELLO - Cellular Location Technology", INTERNET CITATION, 5 November 2001 (2001-11-05), XP002377068, Retrieved from the Internet: URL:http://www.telecom.ntua.gr/cello/docum ents/CELLO-WP2-VTT-D03-007-Int.pdf [retrieved on 2006-04-13]**
• **WIGREN T: "Adaptive Enhanced Cell-ID Fingerprinting Localization by Clustering of Precise Position Measurements", IEEE TRANSACTIONS ON VEHICULAR TECHNOLOGY, IEEE SERVICE CENTER, PISCATAWAY, NJ, US, vol. 56, no. 5, 1 September 2007 (2007-09-01), pages 3199-3209, XP011192659, ISSN: 0018-9545, DOI: 10.1109/TVT.2007.900400**

**(Cont. next page)**

- **CHINA MOBILE ET AL: "A new interface between GMLC and GIS", 3GPP DRAFT; S2-033619, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bangkok; 20031104, 4 November 2003 (2003-11-04), XP050245659, [retrieved on 2003-11-04]**
- **'Technical Specification Group Radio Access Network; Services provided by the physical layer (Release 1999)' 3GPP TS 25.302 V3.7.0 December 2000, page 32,38, XP050117065**
- **TORBJORN WIGREN: 'Adaptive Enhanced Cell-ID Fingerprinting Localization by Clustering of Precise Position Measurements' IEEE TRANSACTIONS ON VEHICULAR TECHNOLOGY vol. 56, no. 5, September 2007, pages 3199 - 3209, XP011192659**

## Description

TECHNICAL FIELD

The present invention relates to a method and an arrangement in a first node and to a method and an arrangement in a second node. More particularly the present invention relates to a mechanism for providing and obtaining, respectively, the round trip time of radio signals travelling between two nodes of a communication system.

BACKGROUND

Currently, standardized and commercially deployed radio access technologies are proliferated. Such radio access technologies include the Global System for Mobile communications (GSM), Enhanced Data Rates for GSM Evolution (EDGE), General Packet Radio System (GPRS), Wide-band Code Division Multiple Access (WCDMA), Long Term Evolution (LTE) systems, Wireless Local Area Networks (WLAN), CDMA 2000 and others.

Positioning in wireless communication systems comprising these or other technologies can be performed in many different ways. A typical approach is that a request for positioning is provided. If the positioning information is not already available, some kind of measurement may be performed, and positioning data may be reported to a node responsible for the actual positioning.

Fingerprinting positioning algorithms operate by creating a radio fingerprint for each point of a fine coordinate grid that covers the Radio Access Network. The fingerprint may e.g. comprise the cell IDs that are detected by the terminal, in each grid point, or quantized path loss or signal strength measurements, with respect to multiple radio base stations, performed by the terminal, in each grid point.

Whenever a position request arrives, a radio fingerprint is firstly computed, based on various parameters which needs to be measured. Thereafter the corresponding grid point is looked up and reported. This requires that the point is unique. A major problem with this approach is that extensive surveying needs to be performed when the fingerprinting database is created. Extra parameter measurements and extra signalling in general has to be performed.

It is thus a problem with existing positioning methods, to generate radio fingerprints that are unique without spending too much radio resources on measurements and signalling. Additional parameter measurements and extra signalling in general have an influence on the overall system load and thus decrease the capacity.

3GPP TS 25.302 V3.7.0 (2000-12) Technical Specification Group Radio Access Network, Services provided by the physical layer (Release 1999) discloses that Round Trip Time (RTT) measurement at a single node may provide an estimate of the RTT of signals between the single node and a user equipment. The RTT measurement may be used to calculate a radial distance to the user equipment within a sector of the single node. The RTT is measured from the time of transmission of a downlink frame to the user equipment to the time of reception of an uplink frame corresponding to the transmitted downlink frame from the user equipment. Moreover, it is disclosed that the RTT measurements may be performed periodically or may be triggered by an event. The RTT measurement may also be reported to upper layers.

EP1209938 discloses a method for measuring a propagation delay value of a frame transmitted by a user equipment (UE) to a Node B in a Time Division Duplex (TDD) mobile communication system. The UE acquires synchronization with the Node B based on a downlink pilot channel signal transmitted in a period of a downlink pilot time slot, and determines an estimated round trip delay value T1 by comparing transmission power of a physical common channel signal in a first time slot with reception power of the physical common channel signal. Further, the UE transmits an uplink pilot channel signal by applying the estimated round trip delay value T1 to a desired transmission point of the uplink pilot channel signal. The UE receives a transmission point correcting value T2 through a Forward Physical Access CHannel (FPACH) signal transmitted from the Node B in a period of one downlink time slot among the time slots, and transmits a Physical Random Access CHannel (PRACH) message with the estimated round trip delay value T1 at a transmission point determined based on the transmission point correcting value T2 and the estimated round trip delay value T1, so that the PRACH message is received at the Node B at a start point of a period of one uplink time slot among the time slots.

WO0189254 discloses a method of determining the location of a user equipment includes determining a round trip time for downlink from at least three nodes to a user equipment, determining the transmission timing delay at the user equipment for the round trip time of each of the three nodes, and determining a distance from each of the at least three nodes using the round trip time and the transmission timing delay.

WIGREN T: "Adaptive Enhanced Cell-ID Fingerprinting Localization by Clustering of Precise Position Measurements" IEEE TRANSACTIONS ON VEHICULAR TECHNOLOGY, IEEE SERVICE CENTER, PISCATAWAY, NJ, US LNKD-DOI:10.1109/TVT.2007.900400, vol. 56, no. 5, 1 September 2007 (2007-09-01), pages 3199-3209, XP011192659 ISSN: 0018-9545 discloses that cell identity (cell ID) is the backbone positioning method of most cellular-communication systems. The reasons for this include availability wherever there is cellular coverage and an instantaneous response. Due to these advantages, technology that enhances the accuracy of the method has received considerable interest. This paper presents a new adaptive enhanced cell-ID (AECID) localization method. The method first clusters high-precision position measurements, e.g., assisted-GPS measurements. The high-precision position measurements of each cluster are tagged with the same set of detectable neighbor cells, auxiliary connection information (e.g., the radio-access bearer), as well as quantized auxiliary measurements [e.g., roundtrip time]. The algorithm proceeds by computation and tagging of a polygon of minimal area that contains a pre-specified fraction of the high-precision position measurements of each tagged cluster. A novel algorithm for calculation of a polygon is proposed for this purpose. Whenever AECID positioning is requested, the method first looks up the detected neighbor cells and the auxiliary connection information and performs required auxiliary measurements. The polygon corresponding to the so-obtained tag is then retrieved and sent in response to the positioning request. The automatic self-learning algorithm provides location results in terms of minimal areas with a guaranteed confidence, adapted against live measurements. The AECID method can, therefore, also be viewed as a robust fingerprinting algorithm. The application to fingerprinting is illustrated by an example where quantized pathloss measurements from six base stations are combined.

EP1641302 discloses, in a mobile terminal of a wireless communication system, that the actual reception quality of data received on a broadcast channel, such as BCCH or MTCH, is measured. Based on the measurement result, a report is prepared and sent to a radio network controller, which controls the transmission on the broadcast channel. The report does not contain the identifier of the mobile terminal. Therefore the reporting can be accomplished without informing the radio network controller about the identity of the mobile terminal.

KR20020058613 discloses a method for reporting information for a diversified bit rate in an IMT-2000 system is provided to make an MAC (Medium Access Control) periodically and repeatedly report the data amount of an RLC(Radio Link Control) buffer to an RRC layer so that the RRC(Radio Resource Control) layer can efficiently manage resources, in case that the operation of the RRC layer is not executed properly when the data amount of the RLC buffer varies at more than or less than a threshold. In an event-triggered periodic mode, in case that an upper threshold is more than the data amount of an RLC buffer and the level is maintained during an upper guard timer, an MAC layer reports the data amount of the RLC buffer to an RRC layer. If a measure suited to the report is not executed by the RRC layer, the MAC layer periodically reports the fact to the RRC layer according to an event-triggered periodic report interval. If an operation for the MAC layer's report is generated from the RRC layer or the data amount of the RLC buffer gets smaller than the threshold, the MAC layers stops the report.

It is thus a problem with existing positioning methods to generate radio fingerprints that are unique without spending too much radio resources on surveying.

SUMMARY

It is therefore an object of the present invention to provide an improved measurement mechanism for a communication system.

According to a first aspect, the object is achieved by a method performed in a base station, for enabling user equipment based fingerprinting positioning based on a round trip time of a signal sent between the base station and a user equipment, the user equipment is associated with a location point, the base station and the user equipment are comprised within a wireless communication system and adapted to exchange wireless signals. The base station sends a first signal to the user equipment. The base station receives a second signal, corresponding to the sent first signal, where the second signal has been sent from the user equipment, as a response to the sent first signal.

Moreover, the base station computes the round trip time of the signal by measuring time from the first signal is sent and the second signal is received.

Next, the base station sends the computed round trip time to the user equipment, wherein the step of sending the computed round trip time is performed periodically, wherein the step of sending the computed round trip time is performed at a periodicity which is determined based on a property out of the group: magnitude of a position change of the user equipment, speed of the user equipment or a periodicity of a Discontinuous Reception cycle, DRX.

According to a second aspect, the object is also achieved by an arrangement for a base station for enabling user equipment based fingerprinting positioning based on a round trip time of a signal sent between the base station and a user equipment, the user equipment is associated with a location point, the base station and the user equipment are comprised within a wireless communication system and are adapted to exchange wireless signals. The arrangement comprises a first sending unit, adapted to send a first signal to the user equipment, a receiving unit, adapted to receive a second signal, corresponding to the sent first signal, which second signal has been sent from the user equipment, as a response to the first signal, and a computing unit, adapted to compute the round trip time of the signal by measuring time from the first signal is sent and the second signal is received. The arrangement further comprises a second sending unit, adapted to send the computed round trip time to the user equipment, wherein the second sending unit is adapted to send the computed round trip time periodically, wherein the second sending unit is adapted to send the computed round trip time at a periodicity which is determined based on a property out of the group: magnitude of a position change of the user equipment, speed of the user equipment or a periodicity of a Discontinuous Reception cycle, DRX.

According to a third aspect, the object is achieved by a method performed in a user equipment, for obtaining the round trip time of a signal sent between a base station and the user equipment, the user equipment is associated with a location point, the base station and the user equipment are comprised within a wireless communication system and adapted to exchange wireless signals. The user equipment receives a first signal from the base station. The user equipment sends a second signal, corresponding to the received first signal, to the base station, as a response to the received first signal. Moreover, the user equipment obtains the round trip time of the signal, from the base station, wherein the round trip time is obtained at a periodicity which is determined based on a property out of the group: magnitude of a position change of the user equipment, speed of the user equipment or a periodicity of a Discontinuous Reception cycle, DRX. Next, the user equipment generates a fingerprint based on the round trip time.

According to a fourth aspect, the object is also achieved by an arrangement for a user equipment, for obtaining the round trip time of a signal sent between a base station and the user equipment, the user equipment is associated with a location point, the base station and the user equipment are comprised within a wireless communication system and adapted to exchange wireless signals. The arrangement comprises a receiving unit, adapted to receive a first signal from the base station, and a sending unit, adapted to send a second signal, corresponding to the received first signal, to the base station, as a response to the received first signal.

Moreover, the arrangement comprises an obtaining unit, adapted to obtain the round trip time of the signal from the base station, wherein the obtaining unit is adapted to obtain the round trip time at a periodicity which is determined based on a property out of the group: magnitude of a position change of the user equipment, speed of the user equipment or a periodicity of a Discontinuous Reception cycle, DRX, and a generating unit adapted to generate a fingerprint based on the round trip time.

Thanks to the measurement of the round trip time according to the present methods, measured with respect to the location point of the user equipment, and the sending of the made measurement according to any of the present solutions, an appropriate and unique radio fingerprint may be generated and provided with reduced overhead signalling involved. Thereby an improved measurement mechanism in a wireless communication system is provided.

An advantage with the present methods and arrangements is that they enable user equipment based fingerprinting positioning for determining the position of a user equipment with better accuracy.

A further advantage with the present signalling methods is that they allow the reporting of round trip time to the user equipment, with reduced signalling overhead.

Yet an advantage with the present methods is that they enable network based fingerprinting positioning for determining the position of the user equipment with better accuracy.

## BRIEF DESCRIPTION OF THE DRAWINGS

The present invention will now be described more in detail in relation to the enclosed drawings, in which:

Figure 1    is a schematic block diagram illustrating a wireless communication system according to some embodiments.

Figure 2    is a schematic block diagram illustrating a wireless communication system according to some embodiments.

Figure 3    is a schematic block diagram illustrating exemplary components of a first node according to some embodiments.

Figure 4A    is a schematic block diagram illustrating exemplary components of a second node according to some embodiments.

Figure 4B    is a schematic block diagram illustrating a second node according to some embodiments where the second node is embodied as a cellular telephone.

Figure 5    is a combined signalling and flowchart illustrating radio signal transmission according to some embodiments.

Figure 6    is a schematic flow chart illustrating an embodiment of the present method in a first node.

Figure 7    is a schematic block diagram illustrating an arrangement in a first node according to some embodiments.

Figure 8    is a schematic flow chart illustrating an embodiment of the present method in a second node.

Figure 9    is a schematic block diagram illustrating an arrangement in a second node according to some embodiments.

## DETAILED DESCRIPTION

The invention is defined as a method and arrangement in a first node and as a method and arrangement in a second node, which may be put into practice in the embodiments described below. This invention may, however, be embodied in many different forms and should not be considered as limited to the embodiments set forth herein; rather, these embodiments are provided so that this disclosure will be thorough and complete, and will fully convey the scope of the invention to those skilled in the art.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

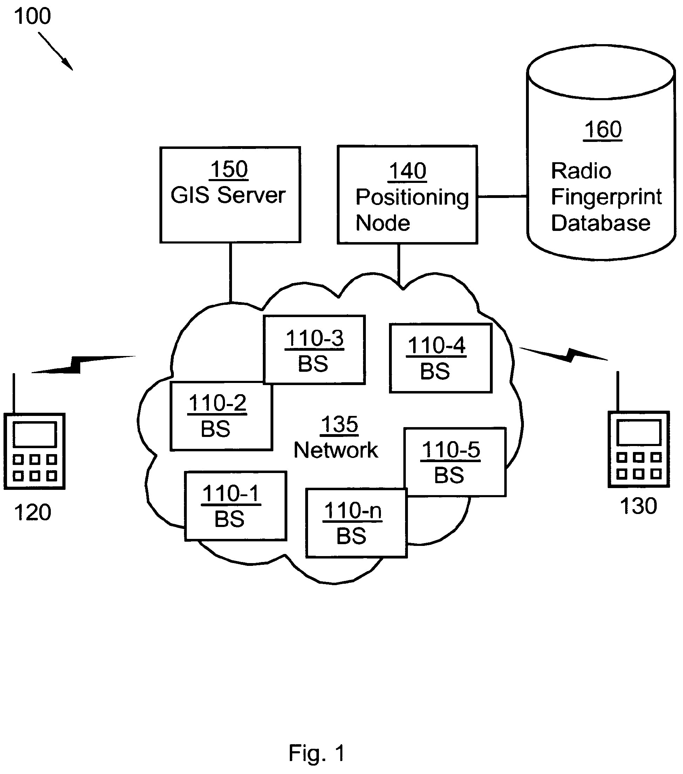

**Figure 1** is a schematic block diagram illustrating an exemplary wireless communication system 100, according to some embodiments. The wireless communication system 100 comprises one or multiple first nodes 110, one or multiple second nodes 120, 130 and a network 135. The wireless communication system 100 may optionally also comprise a positioning node 140 and a Geographic Information System (GIS) server 150 connected to the network 135.

It will be appreciated that the number of components illustrated in Figure 1 is purely exemplary. Other configurations with more, fewer, or a different arrangement of components may be implemented. Moreover, in some embodiments, one or more components in Figure 1 may perform one or more of the tasks described as being performed by one or more other components in Figure 1.

The first node 110 may also be referred to as e.g. a base station, an access point, a Node B, an evolved Node B (eNode B) and/or a base transceiver station, Access Point Base Station, base station router, etc depending e.g. of the radio access technology and terminology used. In Figure 1, the first node 110 is represented by the base stations 110-1, 110-2, 110-3, 110-4, 110-5, ..., 110-n.

According to some embodiments however, the first node 110 may be represented by a user equipment, such as e.g. a wireless communication terminal, a mobile cellular telephone, a Personal Communications Systems terminal, a Personal Digital Assistant (PDA), a laptop, a computer or any other kind of device capable of managing radio resources.

The second node 120, 130 may be represented by e.g. a user equipment, a wireless communication terminal, a mobile cellular telephone, a Personal Communications Systems terminal, a Personal Digital Assistant (PDA), a laptop, a computer or any other kind of device capable of managing radio resources may communicate wirelessly with the base station 110 within the network 135. A Personal Communication System terminal may combine a cellular radiotelephone with data processing, facsimile and data communications capabilities. A PDA may include a radiotelephone, a pager, an Internet/intranet access device, a web browser, an organizer, calendars and/or a global positioning system (GPS) receiver. One or more of the second node 120, 130 may be referred to as a "pervasive computing" device. In some implementations, the second node 120, 130 may be represented by a telephone that is connected to a Public Switched Telephone Network.

According to some embodiments however, the second node 120, 130 may be represented by a base station, such as e.g. an access point, a Node B, an evolved Node B (eNode B) and/or a base transceiver station, Access Point Base Station, base station router, etc depending e.g. of the radio access technology and terminology used.

A first instance of the second node 120 may communicate with another, second instance of the second node 130, or with other nodes not shown, via the network 135 in the wireless communication system 100.

In one implementation, one second node 120 may communicate with another second node 130 via one or more other network nodes that act as intermediate devices between the first instance of the second node 120 and the second instance of the second node 130. For example, as shown in Figure 1, the first node 110-1, which may include wireless base station functionality, may reside as an intermediate component of the network 135 that may be used to facilitate end-to-end communication between the second nodes 120 and 130 or between the second nodes 120, 130 and e.g. the positioning node 140 or GIS server 150. Additional instances of the first node 110-2 through 110-n may be comprised within the network 135.

The first node 110-1 through 110-n may interface with the respective second nodes 120, 130, such that e.g., first node 110-1 may interface with the second node 120, via respective wireless links and may perform, among other functions, Medium Access Control (MAC) and Radio Link Control (RLC).

The positioning node 140 may determine the location of second node 120, 130 in the wireless communication system 100. The optional positioning node 140 may be associated with a radio fingerprint database 160 that stores radio fingerprints derived e.g. from Evolved Universal Terrestrial Radio Access Network (E-UTRAN) and/or inter-Radio Access Technology (IRAT) measurement data. The database 160 may reside internal or external to positioning node 140 and may according to some embodiments be remotely connected to. The E-UTRAN and/or IRAT measurement data may be provided to the positioning node 140, in conjunction with precise geographic position data obtained at the same geographic location at which the E-UTRAN and/or IRAT measurements were performed, e.g., GPS geographic position data. Also, the positioning node 140 may organize the precise geographic position data into clusters having a same or similar radio fingerprint. The positioning node 140 may further determine the cluster boundaries of each cluster and store the cluster boundary information, associated radio fingerprints, and precise geographic position data in the radio fingerprint database 160. The positioning node 140 may subsequently receive E-UTRAN and/or IRAT radio fingerprint measurement data from the first instance of the second node 120 and/or from the second instance of the second node 130 and may perform a lookup into the radio fingerprint database 160 to identify a radio fingerprint stored in the database 160 that matches the received E-UTRAN and/or IRAT radio fingerprint measurement data, and to retrieve a precise geographic position stored in the database 160 that corresponds to the matching radio fingerprint. The positioning node 140 may provide this geographic position to the second node 120, 130 that sent the radio fingerprint measurement data, or to other destinations, such as, for example, an emergency or police call centre.

The GIS server 150 may comprise one or more server entities that provide geographic mapping services, or related mapping services. The GIS server 150 may receive geographic position data concerning the user equipment 120, 130 from the positioning node 140, or from the user equipment 120, 130, and may map the received geographic position data to physical coordinates or a physical address, or perform other mapping related services with the geographic position data.

The network 135 may comprise one or more networks of any type, including a Local Area Network (LAN); a Wide Area Network (WAN); a Metropolitan Area Network (MAN); a telephone network, such as a Public Switched Telephone Network (PSTN) or a Public Land Mobile Network (PLMN); a satellite network; an intranet, the Internet; or a combination of these or other networks. The PLMN may further include a packet-switched subnetwork, such as, for example, General Packet Radio Service (GPRS), Cellular Digital Packet Data (CDPD), or Mobile IP network.

The radio access technologies used for wireless communication within the wireless communication system 100 may comprise technologies such as e.g. Code division multiple access (CDMA), Wideband Code Division Multiple Access (WCDMA), CDMA 2000, High Speed Downlink Packet Data Access (HSDPA), High Data Rate (HDR) etc, just to mention a few examples.

As used herein, the wireless communication system 100 may refer to various radio access technologies without departing from the teachings of the present invention. These radio access technologies may include, for example, radio access technologies, such as Long Term Evolution (LTE), Enhanced Data rates for GSM Evolution (EDGE), General Packet Radio Service (GPRS), Global System for Mobile Telecommunications (GSM), High Speed Packet Data Access (HSPA), Universal Mobile Telecommunications System (UMTS) and/or Wireless Local Area Networks (WLAN), such as Wireless Fidelity (WiFi) and Worldwide Interoperability for Microwave Access (WiMAX), Bluetooth or according to any other wireless communication standard.

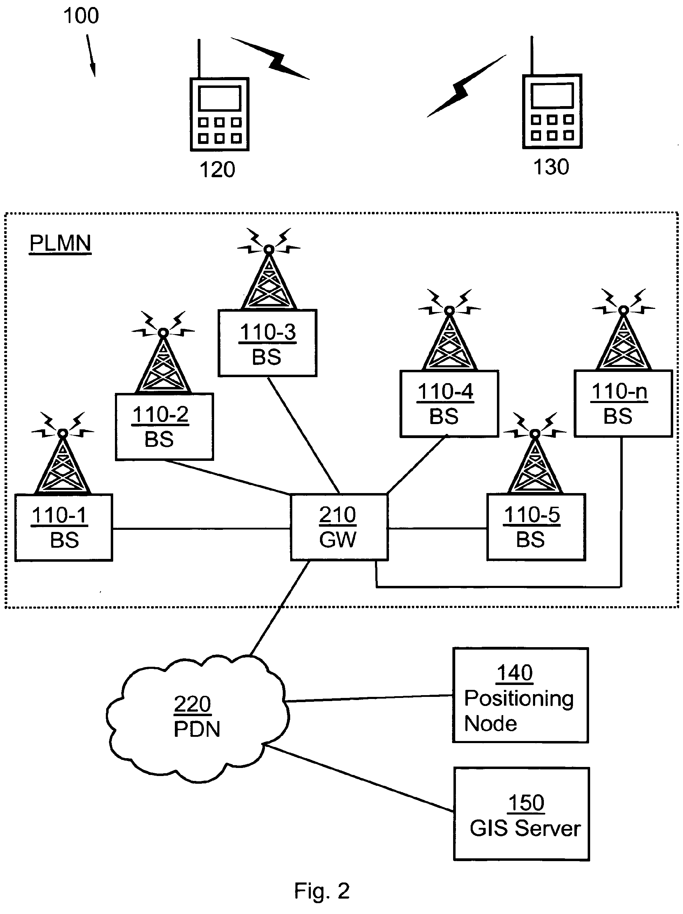

**Figure 2** illustrates an example of the wireless communication system 100 of Figure 1, where the wireless communication system 100 comprises a PLMN. The PLMN may implement a Long Term Evolution (LTE) system architecture. As shown in Figure 2, the second nodes 120, 130 may comprise user equipment such as e.g. cellular radiotelephones that are communicating with one another via the PLMN. The PLMN may include multiple first nodes 110, e.g. base stations 110-1 through 110-N along with their associated antenna arrays and one or more gateways (GW) 210. The gateway 210 may further connect to a Packet Data Network (PDN) 220 of the wireless communication system 100 which may further connect to the optional positioning node 140 and the optional GIS server 150. The PDN 220 may include any type of packet-switched network, such as, for example, the Internet.

The base stations 110-1 through 110-n may interface with respective user equipments 120, 130, e.g., base station 110-1 may interface with the first user equipment 120 via respective wireless links and may perform, among other functions, Medium Access Control (MAC) and Radio Link Control (RLC). For example, the first base station 110-1 may receive data transmissions from the user equipment 120 and may forward those data transmissions on to the gateway 210. The gateway 210 may route data transmissions received from a respective base station 110 to another base station 110, or to the positioning node 140 or to the GIS server 150 via PDN 220. The gateway 210 may further route data transmissions received from positioning node 140 or GIS server 150 via PDN 220 to the respective base station 110-1 through 110-n associated with the destination user equipment 120, 130. Though positioning node 140 is shown in Figure 2 as connected to the PLMN by way of PDN 220, in other implementations, the positioning node 140 may reside as a component of PLMN, e.g. connected internally to the PLMN without messaging having to traverse PDN 220.

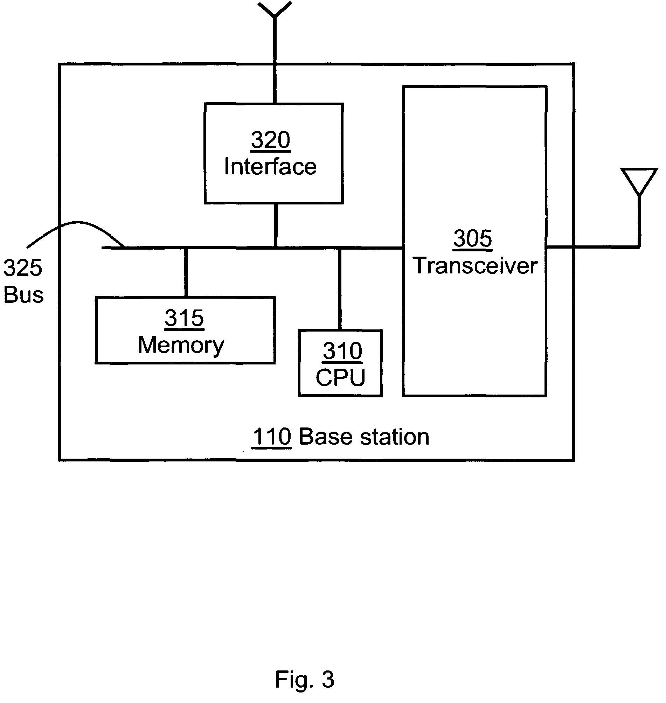

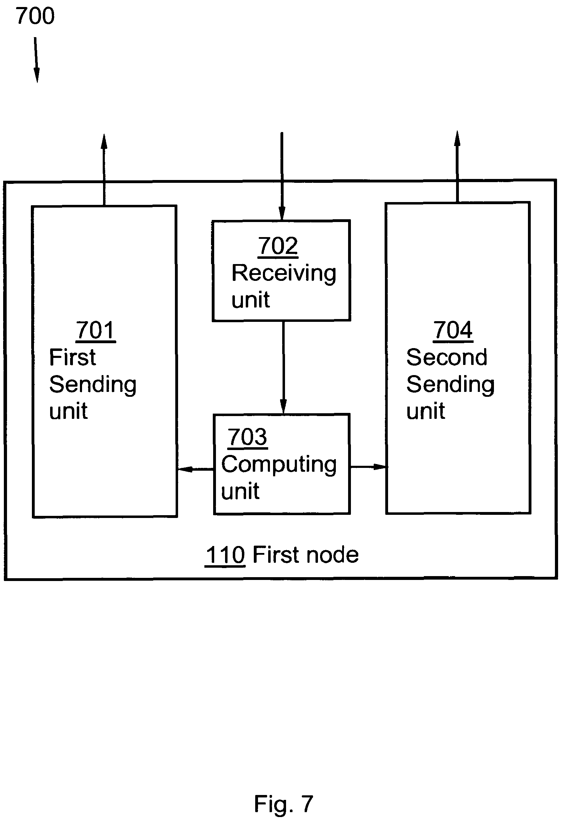

**Figure 3** illustrates one exemplary implementation of the base station 110-1. Base stations 110-2 through 110-n may be similarly configured. The optional positioning node 140 and the optional GIS server 150 may also be similarly configured, however, the positioning node 140 and the GIS server 150 may not comprise the transceiver 305, according to some embodiments. The base station 110-1 may comprise e.g. a transceiver 305, a processing unit 310, a memory 315, an interface 320 and a bus 325. Further, the base station 110 may comprise an arrangement adapted to measure and obtain a value of a round trip time of a signal sent between the base station 110 and the user equipment 120, as later will be explained in detail referring to Figure 7.

The transceiver 305 may comprise transceiver circuitry for transmitting and/or receiving symbol sequences using radio frequency signals via one or more antennas. The one or more antennas may comprise a single antenna or an antenna array and may comprise directional and/or omni-directional antennas. The transceiver 305 may additionally comprise measurement circuitry that may perform e.g. one or more of various different Evolved Universal Terrestrial Radio Access Network (E-UTRAN) radio fingerprint measurements, such as, for example, measuring the Evolved Universal Terrestrial Radio Access (E-UTRA) Reference Signal (DL RS) transmit power at the base station 110-1.

The processing unit 310 may comprise a processor, microprocessor, or processing logic that may interpret and execute instructions. Further, the processing unit 310 may perform all data processing functions for the base station 110-1. The memory 315 may provide permanent, semi-permanent, or temporary working storage of data and instructions for use by the processing unit 310 in performing device processing functions. Also, the memory 315 may be a primary storage memory unit such as a processor register, a cache memory, a Random Access Memory (RAM) or similar. The memory unit 315 may however in some embodiments be a secondary memory unit such as a Read Only Memory (ROM), Electrically Erasable Programmable Read-Only Memory (EEPROM), programmable read-only memory (PROM) or erasable programmable read-only memory (EPROM) or a hard disk drive. The memory unit 315 may however in some embodiments be an off-line storage memory unit, a flash memory, a USB memory or a memory card. The memory unit 315 may further in some embodiments be a Network-attached storage (NAS) or in fact any other appropriate medium such as and/or optical recording medium and its corresponding drive, or any other disk, tape or media that can hold machine readable data.

The interface 320 may include circuitry for interfacing with a link that connects to gateway 210. The bus 325 may interconnect the various components of the base station 110-1 to permit the components to communicate with one another.

The configuration of components of the base station 110-1 illustrated in Figure 3 is for illustrative purposes only. Other configurations comprising more, fewer, or a different arrangement of components may be implemented.

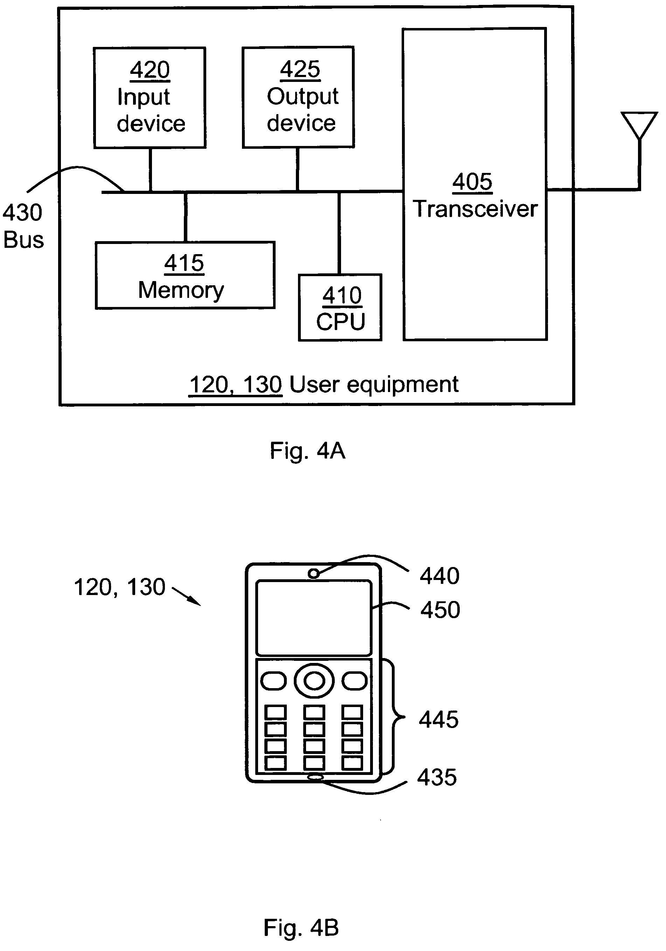

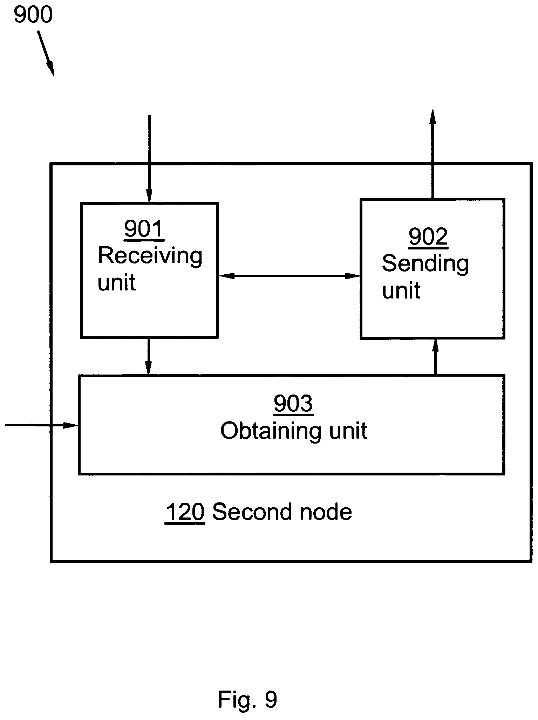

**Figure 4A** illustrates the first user equipment 120 consistent with an exemplary embodiment. The second user equipment 130 may be similarly configured. The first user equipment 120 may comprise e.g. a transceiver 405, a processing unit 410, a memory 415, an input device 420, an output device 425, and a bus 430. Further, the first user equipment 120 may comprise an arrangement adapted to measure and obtain a value of a propagation delay of a signal sent to a base station 110 from the user equipment 120, as later will be explained in detail, referring to Figure 9.

The transceiver 405 may comprise transceiver circuitry for transmitting and/or receiving symbol sequences using radio frequency signals via one or more antennas. The transceiver 405 may comprise, for example, a RAKE or a GRAKE receiver. Transceiver 405 may additionally comprise measurement circuitry that may perform one or more of various different E-UTRAN radio fingerprint measurements, based on, but not limited to, one or more of the following: a signal propagation measurement, signal propagation delay, a round trip time measurement, E-UTRA Reference Signal Received Power (RSRP); E-UTRA Carrier Received Signal Strength Indicator, (E-UTRA carrier RSSI); E-UTRA Reference Signal Received Quality (RSRQ); Wideband Code Division Multiple Access (WCDMA) UTRA Frequency Division Duplex (FDD) Common Pilot Channel (CPICH) Received Signal Code Power (RSCP); WCDMA UTRA FDD carrier RSSI; WCDMA UTRA FDD CPICH Ec/No, corresponding to a received energy per chip divided by a power density in a band; Global System for Mobile Communications (GSM) carrier RSSI; Time division duplex (TDD) mode UTRA TDD carrier RSSI; UTRA TDD Primary Common Control Physical Channel (P-CCPCH) RSCP; CDMA2000 1 times Radio Transmission Technology (1xROUND TRIP TIME) pilot strength; and/or CDMA2000 High Rate Packet Data (HRPD) pilot strength.

The processing unit 410 may comprise a Central Processing Unit (CPU), processor, microprocessor, or processing logic that may interpret and execute instructions. The processing unit 410 may perform all data processing functions for inputting, outputting, and processing of data including data buffering and device control functions, such as call processing control, user interface control, or the like.

The memory 415 may provide permanent, semi-permanent, or temporary working storage of data and instructions for use by processing unit 410 in performing device processing functions. The memory 415 may include ROM, RAM, large-capacity storage devices, such as a magnetic and/or optical recording medium and its corresponding drive, and/or other types of memory devices. The input device 420 may comprise mechanisms for entry of data into the user equipment 120, 130. The key pad may permit manual user entry of data into the user equipment 120, 130. The microphone may comprise mechanisms for converting auditory input into electrical signals. The display unit may include a screen display that may provide a user interface, e.g., a graphical user interface that can be used by a user for selecting device functions. The screen display of the display unit may include any type of visual display, such as, for example, a Liquid Crystal Display (LCD), a plasma screen display, a Light-Emitting Diode (LED) display, an Organic Light-Emitting Diode (OLED) display, etc.

The output device 425 may comprise mechanisms for outputting data in audio and/or video. For example, the output device 425 may comprise a speaker that comprises mechanisms for converting electrical signals into auditory output. The output device 425 may further comprise a display unit that displays output data to the user. For example, the display unit may provide a graphical user interface that displays output data to the user. The bus 430 may interconnect the various components of the user equipment 120 to permit the components to communicate with one another.

The configuration of components of the user equipment 120 illustrated in Figure 4A is for illustrative purposes only. Other configurations comprising more, fewer, or a different arrangement of components may be implemented. For example, in some implementations, the user equipment 120, 130 may comprise a GPS position measuring device, or alternatively be connected e.g. wirelessly, to an attached or associated GPS position measuring device.

**Figure 4B** illustrates an exemplary implementation of the user equipment 120, 130 in which the user equipment 120, 130 comprises a cellular radiotelephone. As shown in Figure 4B, the user equipment 120, 130 may comprise a microphone 435, e.g., of input device 420 for entering audio information into the user equipment 120, a speaker 440, e.g., of output device 425 for providing an audio output from the radiotelephone, a keypad 445, e.g., of input device 420 for manual entry of data or selection of telephone functions, and a display 450, e.g., of input device 420 or output device 425 that may visually display data to the user and/or which may provide a user interface that the user may use to enter data or to select telephone functions, in conjunction with the keypad 445.

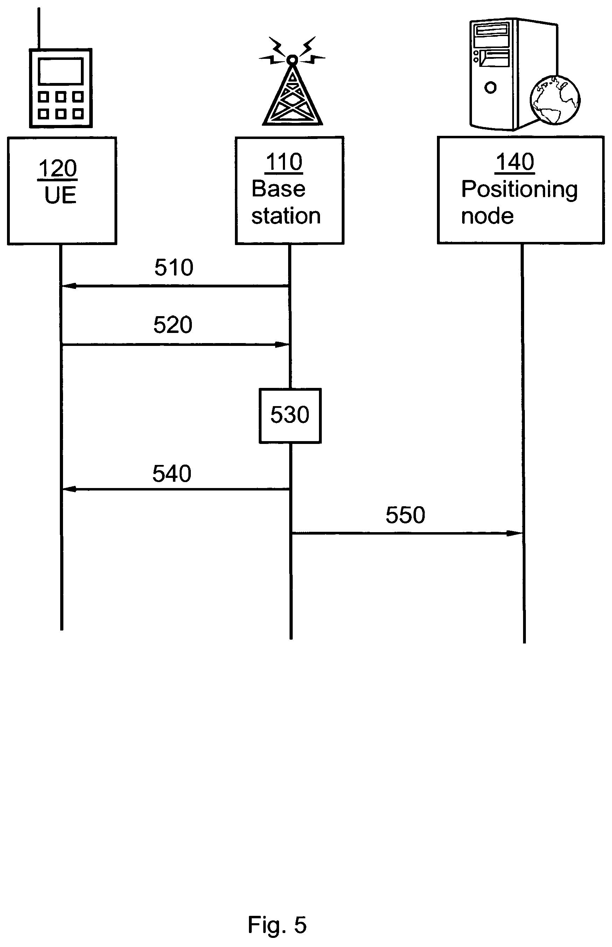

**Figure 5** is a combined signalling and flowchart that depicts the transmission of signals between a base station 110, a user equipment 120 and optionally a positioning node 140.

The base station 110 may transmit a first signal 510, to be received by the user equipment 120. The first signal 510, or rather, the corresponding response signal 520, sent from the user equipment 120 to the base station 110 may be used for estimating the round trip time.

The Round Trip Time is the time difference between the beginning of signal transmission in the downlink and the estimated 1st path of the corresponding signal received in the uplink. The round trip time may be measured at the base station 110. The Round Trip Time measurement is a user specific measurement; this means it is measured separately for each user equipment 120 in the cell.

According to some embodiments, wherein the communication system 100 is an UTRAN system, the Round Trip Time (RTT) may be specified as an UTRAN measurement. Round trip time may be defined as follows:

$$ RTT = TRX - TTX, $$

Where TTX is the time of transmission of the beginning of a downlink DPCH or F-DPCH frame to the user equipment 120. TRX is the time of reception of the beginning, for the first detected path, in time of the corresponding uplink DPCCH frame from the user equipment 120.

However, according to some embodiments, wherein the communication system 100 is represented by E-UTRAN, the round trip time may also be measured at the base station 110, or "eNode B" in E-UTRAN terminology.

In E-UTRAN like in UTRAN fundamentally the round trip time may also be the time difference between the received signal 520 at the base station 110 and the transmitted signal 510 at the base station 110 that triggers the corresponding uplink transmission 520. However er the round trip time measurement as done in E-UTRAN may differ compared to UTRAN since different radio access technologies are used in UTRAN and E-UTRA. UTRAN and E-UTRAN are based on CDMA and OFDMA technologies respectively. In addition the control channels and their structure would also differ in the two systems. This indeed may lead to different measurement methods in the two systems. But regardless of the round trip time measurement mechanism and principles, its meaning is the same in E-UTRAN as in UTRAN in the sense that it enables the network 135 to find the complete round trip time.

The signal 520 is sent as a response to the first sent signal 510. When the base station 110 receives the signal 520 in response to the previously sent signal 510 the Round Trip Time may be calculated at the base station 110.

In order to being able to calculate the round trip time in step 530, or the distance between the base station 110 and the user equipment 120, attention may be paid to the fact that the downlink and uplink may not be aligned in the user equipment 120. For this reason the time between reception of the downlink frame 510 in the user equipment 120 and the transmission of the uplink frame 520 from the user equipment 120 may have to be subtracted from the round trip time measurement. After this, the distance between the base station 110 and the user equipment 120 may be estimated by performing a division by 2 and a multiplication by the speed of light.

When the round trip time has been computed in step 530, the result is reported 540 back to the user equipment 120.

The computed and reported round trip time 540 may be used e.g. for geographical positioning by generating a fingerprint based on the computed round trip time 540.

The geographical positioning may be performed by firstly letting the user equipment 120 generate a fingerprint based on the computed round trip time 540. The generated fingerprint may then be sent to the positioning node 140.

The positioning node 140 may perform a radio fingerprint lookup to obtain the user equipment's 120 geographic position, and then may send a message that comprises the determined geographic position data to the user equipment 120, or to other nodes external to the PLMN such as e.g., to GIS server 150, an emergency or police call centre, etc.

The radio fingerprint lookup may comprise matching the obtained radio fingerprint measurement with previously stored radio fingerprint measurements. The stored geographic position data, that corresponds to matching radio fingerprint measurements, may be retrieved as the user equipment's 120 geographic position.

An appropriate way of sending the round trip time 540 from the base station 110 to the user equipment 120 or, alternatively, from the user equipment 120 to the base station 110 may be via the radio resource control (RRC) protocol i.e. layer 3. Alternatively it may also be signalled via medium access control (MAC) i.e. layer 2.

Thus, according to some embodiments, the round trip time may be signalled to the user equipment 120 via the Radio Resource Control (RRC) protocol i.e. layer 3 Alternatively it may be signalled via Medium Access Control (MAC) i.e. layer 2. Further, it may be possible to transmit this measurement in an application which is mapped on the user plane.

According to some optional embodiments, the measured signal propagation time may alternatively be reported 550 to the positioning node 140.

**Signalling Methods**

The signalling methods are the means which allow reduction of signalling overheads but at the same time ensure that measurements are available when needed. They may therefore set optimum delivery of the round trip time to the user equipment 120 and/or to the network 135 for user equipment based and/or network/base station based positioning methods, respectively. The signalling according to the present method may be based on any of the three principles periodical reporting, event triggered reporting or event triggered periodical reporting. These three report method principles will in the following be further explained in detail.

**Periodical reporting**

The propagation delay is reported at regular interval when using periodical reporting. Typically the base station 110 may measure the round trip time when the user equipment 120 transmits PRACH in relation to the received downlink signal e.g. downlink frame timing, synchronization signal timing, pilot signal timing etc, or other channels in the uplink, such as PUCCH in response to downlink transmission of PDCCH n E-UTRAN.

The determination of the reporting rate in periodical reporting may be based on various parameters such as e.g. the cell size, the change in position of the user equipment 120, or the speed of the user equipment 120. The reporting rate may also be a function of DRX cycle.

According to some embodiments, the network 135 may set some fixed periodic signalling rate, for instance depending upon the cell size. Thus in large cells, the signalling may be done more frequently assuming the user equipment 120 will move faster and vice versa.

However, according to some embodiments, the reporting rate may be set as a function of a change in position. According to these embodiments, the network 135 may adjust or modify the reporting rate depending upon the change in the position of the user equipment 120 over the last monitoring duration. For instance if the user equipment 120 has not changed position significantly over time, then the signalling rate, i.e. reporting the round trip time, may be reduced. The network 135 may also perform a double check by comparing the previously signalled and currently measured round trip time samples. If the position of the user equipment 120 has not changed significantly, then both measurement samples would be in the same range. However the opposite is not necessarily true. Although the position of the user equipment 120 might have changed over time, the round trip time might still be in the same range.

This approach may reduce signalling overheads while the user equipment 120 positioning may still be tracked with required accuracy.

The reporting rate may, according to some embodiments be a function of the speed of the user equipment 120. The network 135 may according to these embodiments adjust or modify the reporting rate depending upon the speed of the user equipment 120. It may be assumed that the signalling concerning the round trip time may be performed more frequently if the speed of the user equipment 120 is high, as this implicates a change in geographical position.

According to some embodiments, the reporting rate may be a function of the DRX cycle. When DRX is in use, the network 135 may at most signal the propagation delay to the user equipment 120, 130 once every DRX. Therefore, in DRX mode, which may be employed also in connected mode, the network 135 may with certain advantage adjust the periodical reporting rate as a function of DRX cycle.

Regardless of whether the DRX is in use or not, the base station 110 may perform round trip time whenever uplink transmission occurs. Note that uplink transmission may take place independent of the DRX cycle. Therefore the network 135 may send the round trip time to the positioning node 140 with any rate irrespective of the DRX cycle in operation.

**Event triggered reporting**

According to some embodiments, the round trip time may be sent in response to an event. The event may be e.g. after the measurement of the round trip time or when the position change of the user equipment 120 exceeds a certain threshold value.

The event may occur in the base station 110, which performs the round trip time measurement according to some embodiments. In UTRAN the RNC may configure such an event at the base station 110, i.e. Node B, for transmitting measurement, at the user equipment 120 and at the positioning node 140 for receiving measurement according to the said event. In E-UTRAN this may be an internal event at the eNode B 110, which in turn may also configure the user equipment 120 and the positioning node 140 for receiving the round trip time according to the occurred event.

According to some embodiments, the round trip time may be sent to the user equipment 120 and/or the positioning node 140 after the measurement of round trip time. According to those embodiments, the round trip time may be sent whenever the base station 110 performs round trip time measurement, especially while receiving PRACH or other unilateral control channel in the uplink.

According to some embodiments, the round trip time may be signalled to the user equipment 120 and/or the positioning node 140 when the change in position of the user equipment 120 exceeds a threshold value. The network 135 may according to these embodiments, send the round trip time if it is detected that the position of the user equipment 120 has changed beyond some threshold level. Similarly, if the position of the user equipment 120, 130 has not changed over a pre-determined time period, then the network 135 may not send any new value of the round trip time. The network 135 may also perform a double check by comparing the previously sent round trip time and currently measured round trip time samples. If the user equipment position has not changed significantly, then both measurement samples may be expected to be found in the same range. However the opposite is not necessarily true. Thus, although the user equipment 120 position might have changed over time, the round trip time may still be in the same range.

**Event triggered periodical reporting**

According to some embodiments, the reporting of the round trip time may be performed periodically after the occurrence of some event. The triggering event may be e.g. when the change in round trip time exceeds a certain threshold value, when the change of position of the user equipment 120 exceeds a certain threshold value, when the user equipment 120 speed exceeds a certain threshold value etc.

According to some embodiments, the reporting of the propagation delay is performed when the change in round trip time exceeds a certain threshold limit value. According to this method if there is significant change in the round trip time over a pre-determined time the network 135 starts periodical reporting of the round trip time. The network 135 reverts to the event reporting if the change in the round trip time falls below another certain threshold limit value over a pre-determined time.

According to some embodiments, the network 135 may start periodical reporting of the measured propagation delay when the change of position of the user equipment 120 exceeds a certain threshold limit value. The threshold limit value may be predetermined and set e.g. by the network 135.

The network 135 may revert to the event reporting if the change in the user equipment position falls below another threshold, over a pre-determined time.

According to some embodiments, the network 135 may start periodical reporting of the round trip time if the user equipment 120 speed exceeds a certain threshold limit value over a pre-determined time. The network 135 may revert to the event reporting paradigm if the user equipment 120 speed falls below another threshold limit value over a pre-determined time.

The user equipment 120 speed may be determined in several ways. The speed of the user equipment 120 may e.g. be be tracked at the base station 110 by measuring the Doppler frequency of the user equipment 120 under consideration.

The round trip time may be reported in terms of number of chips in UTRAN and/or as a function of cyclic prefix in E-UTRAN, according to some embodiments. The normal and extended Control Plane (CP) lengths in E-UTRAN may be e.g. in the order of 5 and 16 $\mu$s respectively. Since round trip time can be very fine therefore in E-UTRAN the reporting can still be done in terms of number of CP (N). However rules can be defined to derive the actual round trip time (Dp). For instance:

$$D_p = 2^{k \times N}$$

Where N is an integer which can take any positive and negative value; k is a constant. Another possibility is to report it in the scale of nano or micro second.

According to some embodiments, the report of the absolute value of the round trip time may be followed by several different reports. The differential means the difference between the previous and current absolute round trip time e.g. $\Delta N$ in case of E-UTRAN. One bit may indicate whether the reported quantity is absolute or differential.

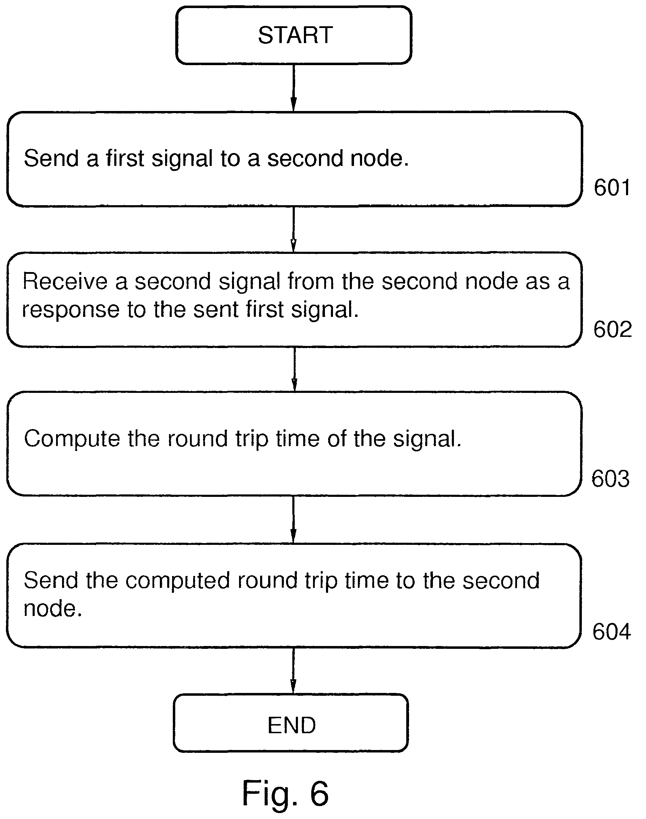

**Figure 6** is a flow chart illustrating a method in a first node 110, for determining the round trip time of a signal sent between the first node 110 and a second node 120. The second node 120 is associated with a location point. The first node 110 and the second node 120 are comprised within a wireless communication system 100. Further, the first node 110 and the second node 120 are adapted to exchange wireless signals.

The first node 110 may be represented by a base station and the second node 120 may be represented by a user equipment, such as e.g. a mobile terminal, according to some embodiments. However, according to some different embodiments, the first node 110 may be represented by a user equipment and the second node 120 may be represented by a base station.

To appropriately send the value of the round trip time, the method may comprise a number of steps 601-604. It is however to be noted that some parts of the described method steps are optional and only comprised within some embodiments. Further, it is to be noted that the method steps 601-604 may be performed in any arbitrary chronological order and that some of them, e.g. step 602 and step 603, or even all steps may be performed simultaneously or in an altered, arbitrarily rearranged, decomposed or even completely reversed chronological order. The method comprises the following steps:

**Step 601**

A first signal is sent to the second node 120.
According to some optional embodiments, the first signal may be sent to the second node 120 over one of the following channels in Evolved Universal Terrestrial Radio Access Network, E-UTRAN: Physical Uplink Control Channel, PUCCH, Physical Downlink Control Channel, PDCCH, Physical Random Access Channel, PRACH, downlink synchronization signal or downlink common reference signal.
However, according to some optional embodiments, the first signal may be sent to the second node 120 over one of the following channels in Wide-band Code Division Multiple Access, WCDMA: Downlink Dedicated Physical Control CHannel, DPCCH, Fractional Downlink Dedicated Control CHannel, F-DPCH, Physical Random Access CHannel, PRACH, downlink synchronization signal or downlink common pilot signal.

**Step 602**

A second signal, corresponding to the sent first signal, is received from the second node 120. The signal is sent from the second node 120, as a response to the sent first signal.
According to some optional embodiments, the second signal may be received from the second node 120 over one of the following channels in E-UTRAN: PUCCH, PDCCH, PRACH, downlink synchronization signal or downlink common reference signal.
According to some optional embodiments, the second signal may be received from the second node 120 over one of the following channels in WCDMA: DPCCH, F-DPCH, PRACH, downlink synchronization signal or downlink common pilot signal.

**Step 603**

The round trip time of the signal is computed.
The round trip time of the signal may be computed by measuring the time from the first signal is sent and the second signal is received at the first node, according to some embodiments. A subtraction may be made to compensate for the time it takes for the second node 120 to start sending the second signal when it has received the first signal from the first node 110. This time delay may be due to e.g. conversion from receiving mode to sending mode in the transceiver 405.

**Step 604**

The computed round trip time is sent to the second node 120.
According to some optional embodiments, the computed round trip time may be sent to the second node 120 using one of the protocols: radio resource control protocol or medium access protocol.
The sending of the computed round trip time may, according to some optional embodiments, be performed periodically.
The sending of the computed round trip time may, according to some optional embodiments, be performed at a periodicity which is determined based on a property out of the group: magnitude of a position change of the second node 120, speed of the second node 120 or the periodicity of a Discontinuous Reception cycle, DRX.
However, according to some optional embodiments, the computed round trip time may be sent in an event triggered fashion.
The triggering event may according to some embodiments be the measurement of the round trip time, or when a position change of the second node 120, exceeds a certain threshold value.
However, according to some embodiments, the sending of the computed round trip time may be performed in event triggered periodical fashion. Thus the computed round trip time may be sent periodically, if a threshold limit value is exceeded and sent in event triggered fashion if the threshold limit value is not exceeded.
According to some embodiments, the threshold limit value may concern a second node parameter out of the group: difference between two measurements of round trip time, magnitude of a position change of the second node 120 or speed of the second node 120.
To perform the method steps 601-604 above, the first node 110 comprises an arrangement 700, depicted in **Figure 7.** The arrangement 700 is configured for determining the round trip time of a signal sent between the first node 110 and a second node 120. The second node 120 is associated with a location point. The first node 110 and the second node 120 are comprised within a wireless communication system 100. Also, the first node 110 and the second node 120 are adapted to exchange wireless signals.
The arrangement 700 comprises a first sending unit 701. The first sending unit 701 is adapted to send a first signal to the second node 120. Further, the arrangement 700 comprises a receiving unit 702. The receiving unit 702 is adapted to receive a second signal, corresponding to the sent first signal. The second signal has been sent from the second node 120, as a response to the first signal. Further yet, the arrangement 700 comprises a computing unit 703. The computing unit 703 is adapted to compute the round trip time of the signal. Still further, the arrangement 700 also comprises a second sending unit 704. The second sending unit 704 is adapted to send the computed round trip time to the second node 120.

It is to be noted that any internal electronics of the first node 110 not completely necessary for performing the present method according to the method steps 601-604 such as e.g. some of the internal electronics of the base station 110 depicted in Figure 3, has been omitted from Figure 7, for clarity reasons.

The computing unit 703, which is comprised within the arrangement 700 in the first node 110 may be a processing unit.

The second sending unit 704 may according to some embodiments be configured to send the value of the computed round trip time using any of the protocols radio resource control protocol or medium access protocol.

The second sending unit 704 may according to some embodiments be configured to send the value of the computed round trip time periodically. The periodicity may be determined based on a property out of the group: magnitude of a position change of the second node 120, speed of the second node 120 or the periodicity of a Discontinuous Reception cycle, DRX.

However, according to some embodiments, the second sending unit 704 may be configured to send the value of the computed round trip time in event triggered fashion. The triggering event may be e.g. a measurement of signal propagation delay, or when a position change of the second node 120 exceeding a certain threshold value, is detected.

According to some embodiments the second sending unit 704 may be configured to send the value of the computed round trip time in an event triggered periodical fashion.

Further, according to some embodiments, the second sending unit 704 may be configured to send the value of the computed round trip time periodically; if a threshold limit value is exceeded. Otherwise, if the threshold limit value is not exceeded, the second sending unit 704 may be configured to send the value of the computed round trip time in an event triggered fashion.

According to some embodiments, the threshold limit value concerns a second node parameter out of the group: signal propagation delay, magnitude of a position change of the second node 120 or speed of the second node 120.

It is to be noted that the described units 701-704 comprised within the arrangement 700 in the first node 110 are to be regarded as separate logical entities but not with necessity separate physical entities. Any, some or all of the units 701-703 may be comprised or co-arranged within the same physical unit. However, in order to facilitate the understanding of the functionality of the arrangement 700 in the first node 110, the comprised units 701-704 are illustrated as separate physical units in Figure 7.

As an example of the latter, the first sending unit 701, the second sending unit 704 and the receiving unit 702 may, according to some embodiments, be comprised within one physical unit, a transceiver, which may comprise a transmitter circuit and a receiver circuit, which respectively transmits outgoing radio frequency signals to the second node 120 and receives incoming radio frequency signals from the second node 120 via an antenna. The antenna may be an embedded antenna, a retractable antenna or any antenna known to those having skill in the art without departing from the scope of the present invention. The radio frequency signals transmitted between the second node 120 and the first node 110 may comprise both traffic and control signals e.g., paging signals/messages for incoming calls, which may be used to establish and maintain a voice call communication with another party or to transmit and/or receive data, such as SMS, e-mail or MMS messages, with a remote user equipment 130.

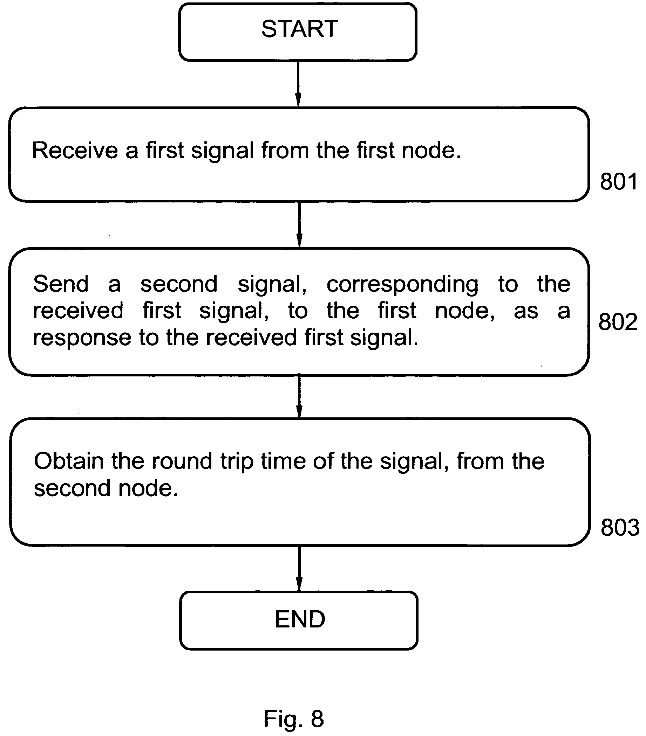

**Figure 8** is a flow chart illustrating a method in a user equipment 120, for obtaining the round trip time of a signal sent between a first node 110 and the second node 120. The second node 120 is associated with a location point. The first node 110 and the second node 120 are comprised within a wireless communication system 100. Further, the first node 110 and the second node 120 are adapted to exchange wireless signals.

The wireless communication system 100 may be e.g. UTRAN or EUTRAN. The first node 110 may be represented by a base station, such as e.g. a Node B or an e-Node B. The second node 120 may be represented by a user equipment such as e.g. a mobile telephone. However, according to some embodiments, first node 110 may be represented by a user equipment such as e.g. a mobile telephone and the second node 120 may be represented by a base station, such as e.g. a Node B or an e-Node B.

To appropriately obtain the round trip time of the signal, the method may comprise a number of steps 801-803. It is however to be noted that some parts of the described method steps are optional and only comprised within some embodiments. The method comprises the following steps:

**Step 801**

A first signal is received from the first node 110.

According to some optional embodiments, the first signal may be received from the first node 110 over one of the following channels in E-UTRAN: Physical Uplink Control Channel, PUCCH, Physical Downlink Control Channel, PDCCH, Physical Random Access Channel, PRACH, downlink synchronization signal or downlink common reference signal.

However, according to some optional embodiments, the first signal may be received from the first node 110 over one of the following channels in WCDMA: Downlink Dedicated Physical Control CHannel, DPCCH, Fractional Downlink Dedicated Control CHannel, F-DPCH, Physical Random Access CHannel, PRACH, downlink synchronization signal or downlink common pilot signal.

**Step 802**

A second signal, corresponding to the received first signal is sent to the first node 110, as a response to the received first signal.

According to some optional embodiments, the second signal may be sent to the first node 110 over one of the following channels in E-UTRAN: PUCCH, PDCCH, PRACH, downlink synchronization signal or downlink common reference signal.

According to some optional embodiments, the second signal may be sent to the first node 110 over one of the following channels in WCDMA: DPCCH, F-DPCH, PRACH, downlink synchronization signal or downlink common pilot signal.

**Step 803**

The round trip time of the signal is received from the second node 120.

**Figure 9** schematically depicts an embodiment of an arrangement 900 in a second node 120. The arrangement 900 is configured to obtain the round trip time of a signal sent between a first node 110 and the second node 120. The second node 120 is associated with a location point. The first node 110 and the second node 120 are comprised within a wireless communication system 100. The first node 110 and the second node 120 are further adapted to exchange wireless signals.

The arrangement 900 comprises a receiving unit 901. The receiving unit 901 is adapted to receive a signal from the first node 110. Further, the arrangement 900 comprises a sending unit 902. The sending unit 902 is adapted to send a second signal, corresponding to the received first signal, to the first node 110, as a response to the received first signal. Also, the arrangement 900 comprises an obtaining unit 903. The obtaining unit 903 is adapted to obtain the round trip time of the signal from the second node 120.

It is to be noted that any internal electronics of the second node 120 not completely necessary for performing the present method according to the method steps 801-803, such as e.g. some of the internal electronics of the second node 120 depicted in Figure 4, has been omitted from Figure 9, for clarity reasons.

It is to be noted that some of the described units in the arrangement 900 in the second node 120, such as e.g. 901 and 902, are to be regarded as separate logical entities but not with necessity separate physical entities. The receiving unit 901 and the sending unit 902 may be comprised or co-arranged within the same physical unit. As an example of the latter, the receiving unit 901 and the sending unit 902 may according to some embodiments be comprised within one physical unit, a transceiver, which may comprise a transmitter circuit and a receiver circuit, which respectively transmits outgoing radio frequency signals to the first node 110 and receives incoming radio frequency signals from the first node 110 via an antenna. The antenna may be an embedded antenna, a retractable antenna or any antenna known to those having skill in the art without departing from the scope of the present invention. The radio frequency signals transmitted between the second node 120 and the first node 110 may comprise both traffic and control signals e.g., paging signals/messages for incoming calls, which may be used to establish and maintain a voice call communication with another party or to transmit and/or receive data, such as SMS, e-mail or MMS messages, with a remote user equipment 130.

**Some particular embodiments**

The present methods for sending and obtaining, respectively, a round trip time of a signal sent between the first node 110 and the second node 120 may be implemented through one or more processors in the first node 110 and/or the second node 120 together with computer program code for performing the functions of the present methods. The program code mentioned above may also be provided as a computer program product, for instance in the form of a data carrier carrying computer program code for performing the methods according to the respective method steps when being loaded into the processor unit. The data carrier may be e.g. a CD ROM disc, a memory stick, or any other appropriate medium such as a disk or tape that can hold machine readable data. The computer program code may furthermore be provided as pure program code on a server and downloaded to the first node 110 and/or the second node 120 e.g. remotely.

Thus a computer readable medium encoded with a computer program for providing a round trip time of a signal sent between the first node 110 and the second node 120 may perform the method according to the method steps 601-604.

Thus also a computer readable medium encoded with a computer program for obtaining a round trip time of a signal sent between the first node 110 and the second node 120 may perform the method according to the method steps 801-803.

**Claims**

1. Method performed in a base station (110), for enabling user equipment based fingerprinting positioning based on a round trip time of a signal sent between the base station (110) and a user equipment (120), the user equipment (120) is associated with a location point, the base station (110) and the user equipment (120) are comprised within a wireless communication system (100) and adapted to exchange wireless signals, the method comprises the steps of:

sending (601) a first signal to the user equipment (120),
receiving (602) a second signal, corresponding to the sent first signal, where the second signal has been sent from the user equipment (120), as a response to the sent first signal,
computing (603) the round trip time of the signal by measuring time from the first signal is sent and the second signal is received, and wherein the method is **characterized by:**

sending (604) the computed round trip time to the user equipment (120), wherein the step of sending (604) the computed round trip time is performed periodically, wherein the step of sending (604) the computed round trip time is performed at a periodicity which is determined based on a property out of the group: magnitude of a position change of the user equipment (120), speed of the user equipment (120) or a periodicity of a Discontinuous Reception cycle, DRX.

2. Method according to claim 1, wherein the step of sending (604) the computed round trip time is performed in event triggered fashion.

3. Method according to claim 1, wherein the triggering event is a measurement of round trip time, or when a position change of the user equipment (120), exceeds a certain threshold value.

4. Method according to claim 1, wherein the step of sending (604) the computed 30 round trip time is performed in event triggered periodical fashion.

5. Method according to claim 4, wherein the step of sending (604) the computed round trip time is performed periodically, if a threshold limit value is exceeded and wherein the step of sending (604) the computed round trip time is performed in event triggered fashion if the threshold limit value is not exceeded.

6. Method according to claim 5, wherein the threshold limit value concerns a user equipment parameter out of the group: difference between two measurements of round trip time, magnitude of a position change of the user equipment (120) or speed of the user equipment (120).

7. Arrangement (700) for a base station (110) for enabling user equipment based fingerprinting positioning based on a round trip time of a signal sent between the base station (110) and a user equipment (120), the user equipment (120) is associated with a location point, the base station (110) and the user equipment (120) are comprised within a wireless communication system (100) and are adapted to exchange wireless signals, the arrangement (700) comprises:

a first sending unit (701), adapted to send a first signal to the user equipment (120),
a receiving unit (702), adapted to receive a second signal, corresponding to the sent first signal, which second signal has been sent from the user equipment (120), as a response to the first signal,
a computing unit (703), adapted to compute the round trip time of the signal by measuring time from the first signal is sent and the second signal is received, and wherein the arrangement (700) is **characterized by**:

a second sending unit (704), adapted to send the computed round trip time to the user equipment (120), wherein the second sending unit (704) is adapted to send the computed round trip time periodically, wherein the second sending unit (704) is adapted to send the computed round trip time at a periodicity which is determined based on a property out of the group: magnitude of a position change of the user equipment (120), speed of the user equipment (120) or a periodicity of a Discontinuous Reception cycle, DRX.

8. Method performed in a user equipment (120), for obtaining the round trip time of a signal sent between a base station (110) and the user equipment (120), the user equipment (120) is associated with a location point, the base station (110) and the user equipment (120) are comprised within a wireless communication system (100) and adapted to exchange wireless signals, the method comprises the steps of:

receiving (801) a first signal from the base station (110),
sending (802) a second signal, corresponding to the received first signal, to the base station (110), as a response to the received first signal, and wherein the method is **characterized by:**

obtaining (803) the round trip time of the signal, from the base station (110), wherein the round trip time is obtained at a periodicity which is determined based on a property out of the group: magnitude of a position change of the user equipment (120), speed of the user equipment (120) or a periodicity of a Discontinuous Reception cycle, DRX, and

generating a fingerprint based on the round trip time.

9. Arrangement (900) for a user equipment (120), for obtaining the round trip time of a signal sent between a base station (110) and the user equipment (120), the user equipment (120) is associated with a location point, the base station (110) and the user equipment (120) are comprised within a wireless communication system (100) and adapted to exchange wireless signals, the arrangement (900) comprises:

a receiving unit (901), adapted to receive a first signal from the base station (110),
a sending unit (902), adapted to send a second signal, corresponding to the received first signal, to the base station (110), as a response to the received first signal, and wherein the arrangement (900) is **characterized by:**

an obtaining unit (903), adapted to obtain the round trip time of the signal from the base station (110), wherein the obtaining unit (903) is adapted to obtain the round trip time at a periodicity which is determined based on a property out of the group: magnitude of a position change of the user equipment (120), speed of the user equipment (120) or a periodicity of a Discontinuous Reception cycle, DRX, and
generating unit adapted to generate a fingerprint based on the round trip time.

**Patentansprüche**

1. Verfahren, durchgeführt in einer Basisstation (110), zur Ermöglichung benutzergerätebasierter Fingerprinting-Positionierung anhand einer Umlaufzeit eines Signals, das zwischen der Basisstation (110) und einem Benutzergerät (120) gesendet wird, wobei das Benutzergerät (120) einem Standort-Punkt zugeordnet ist, die Basisstation (110) und das Benutzergerät (120) in einem drahtlosen Kommunikationssystem (100) enthalten sind und geeignet sind, drahtlose Signale auszutauschen, wobei das Verfahren die folgenden Schritte umfasst:

Senden (601) eines ersten Signals an das Benutzergerät (120),
Empfangen (602) eines zweiten Signals entsprechend dem gesendeten ersten Signal, wobei das zweite Signal vom Benutzergerät (120) als Antwort auf das gesendete erste Signal gesendet worden ist,
Berechnen (603) der Umlaufzeit des Signals durch Messen der Zeit zwischen dem Senden des ersten Signals und dem Empfangen des zweiten Signals, und wobei das Verfahren **gekennzeichnet ist durch**:

Senden (604) der berechneten Umlaufzeit an das Benutzergerät (120), wobei der Schritt des Sendens (604) der berechneten Umlaufzeit periodisch erfolgt, wobei der Schritt des Sendens (604) der berechneten Umlaufzeit mit einer Periodizität erfolgt, die anhand einer Eigenschaft aus der folgenden Gruppe bestimmt wird: Betrag einer Positionsänderung des Benutzergeräts (120), Geschwindigkeit des Benutzergeräts (120) oder eine Periodizität eines diskontinuierlichen Empfangszyklus, DRX.

2. Verfahren nach Anspruch 1, wobei der Schritt des Sendens (604) der berechneten Umlaufzeit durch Ereignisauslösung erfolgt.

3. Verfahren nach Anspruch 1, wobei das auslösende Ereignis eine Messung der Umlaufzeit ist oder wenn eine Positionsänderung des Benutzergeräts (120) einen bestimmten Schwellwert überschreitet.

4. Verfahren nach Anspruch 1, wobei der Schritt des Sendens (604) der berechneten Umlaufzeit durch periodische Ereignisauslösung erfolgt.

5. Verfahren nach Anspruch 4, wobei der Schritt des Sendens (604) der berechneten Umlaufzeit periodisch erfolgt, wenn ein Grenzschwellwert überschritten wird, und wobei der Schritt des Sendens (604) der berechneten Umlaufzeit durch Ereignisauslösung erfolgt, wenn der Grenzschwellwert nicht überschritten wird.

6. Verfahren nach Anspruch 5, wobei es sich bei dem Grenzschwellwert um einen Benutzergeräteparameter aus der folgenden Gruppe handelt: Differenz zwischen zwei Messungen der Umlaufzeit, Betrag einer Positionsänderung des Benutzergeräts (120) oder Geschwindigkeit des Benutzergeräts (120).

7. Anordnung (700) für eine Basisstation (110) zur Ermöglichung benutzergerätebasierter Fingerprinting-Positionierung anhand einer Umlaufzeit eines Signals, das zwischen der Basisstation (110) und einem Benutzergerät (120) gesendet wird, wobei das Benutzergerät (120) einem Standort-Punkt zugeordnet ist, die Basisstation (110) und das Benutzergerät (120) in einem drahtlosen Kommunikationssystem (100) enthalten sind und geeignet sind, drahtlose Signale auszutauschen, wobei die Anordnung (700) umfasst:

eine erste Sendeeinheit (701), die geeignet ist, ein erstes Signal an das Benutzergerät (120) zu senden,

eine Empfangseinheit (702), die geeignet ist, ein zweites Signal entsprechend dem gesendeten ersten Signal zu empfangen, wobei das zweite Signal vom Benutzergerät (120) als Antwort auf das erste Signal gesendet worden ist,

eine Recheneinheit (703), die geeignet ist, die Umlaufzeit des Signals durch Messen der Zeit zwischen dem Senden des ersten Signals und dem Empfangen des zweiten Signals zu berechnen, und wobei die Anordnung (700) **gekennzeichnet ist durch**:

eine zweite Sendeeinheit (704), die geeignet ist, die berechnete Umlaufzeit an das Benutzergerät (120) zu senden, wobei die zweite Sendeeinheit (704) geeignet ist, die berechnete Umlaufzeit periodisch zu senden, wobei die zweite Sendeeinheit (704) geeignet ist, die berechnete Umlaufzeit mit einer Periodizität zu senden, die anhand einer Eigenschaft aus der folgenden Gruppe bestimmt wird: Betrag einer Positionsänderung des Benutzergeräts (120), Geschwindigkeit des Benutzergeräts (120) oder eine Periodizität eines diskontinuierlichen Empfangszyklus, DRX.

8. Verfahren, durchgeführt in einem Benutzergerät (120), zum Beschaffen der Umlaufzeit eines Signals, das zwischen einer Basisstation (110) und dem Benutzergerät (120) gesendet wird, wobei das Benutzergerät (120) einem Standort-Punkt zugeordnet ist, die Basisstation (110) und das Benutzergerät (120) in einem drahtlosen Kommunikationssystem (100) enthalten sind und geeignet sind, drahtlose Signale auszutauschen, wobei das Verfahren die folgenden Schritte umfasst:

Empfangen (801) eines ersten Signals von der Basisstation (110),
Senden (802) eines zweiten Signals entsprechend dem empfangenen ersten Signal an die Basisstation (110) als Antwort auf das empfangene erste Signal, und wobei das Verfahren **gekennzeichnet ist durch**:

Beschaffen (803) der Umlaufzeit des Signals von der Basisstation (110), wobei die Umlaufzeit mit einer Periodizität beschafft wird, die anhand einer Eigenschaft aus der folgenden Gruppe bestimmt wird: Betrag einer Positionsänderung des Benutzergeräts (120), Geschwindigkeit des Benutzergeräts (120) oder eine Periodizität eines diskontinuierlichen Empfangszyklus, DRX, und
Erzeugen eines Fingerprints anhand der Umlaufzeit.

9. Anordnung (900) für ein Benutzergerät (120) zum Beschaffen der Umlaufzeit eines Signals, das zwischen einer Basisstation (110) und dem Benutzergerät (120) gesendet wird, wobei das Benutzergerät (120) einem Standort-Punkt zugeordnet ist, wobei die Basisstation (110) und das Benutzergerät (120) in einem drahtlosen Kommunikationssystem (100) enthalten sind und geeignet sind, drahtlose Signale auszutauschen, wobei die Anordnung (900) umfasst:

eine Empfangseinheit (901), die geeignet ist, ein erstes Signal von der Basisstation (110) zu empfangen,
eine Sendeeinheit (902), die geeignet ist, ein zweites Signal entsprechend dem empfangenen ersten Signal als Antwort auf das empfangene erste Signal an die Basisstation (110) zu senden, und wobei die Anordnung (900) **gekennzeichnet ist durch**:

eine Beschaffungseinheit (903), die geeignet ist, die Umlaufzeit des Signals von der Basisstation (110) zu beschaffen, wobei die Beschaffungseinheit (903) geeignet ist, die Umlaufzeit mit einer Periodizität zu beschaffen, die anhand einer Eigenschaft aus der folgenden Gruppe bestimmt wird: Betrag einer Positionsänderung des Benutzergeräts (120), Geschwindigkeit des Benutzergeräts (120) oder eine Periodizität eines diskontinuierlichen Empfangszyklus, DRX, und
eine Erzeugungseinheit, die geeignet ist, einen Fingerprint anhand der Umlaufzeit zu erzeugen.

**Revendications**

1. Procédé exécuté dans une station de base (110) destiné à permettre un positionnement de prise d'empreintes digitales basée sur un équipement d'utilisateur sur la base d'un temps de propagation aller-retour d'un signal envoyé entre la station de base (110) et un équipement d'utilisateur (120), l'équipement d'utilisateur (120) est associé à un point d'emplacement, la station de base (110) et l'équipement d'utilisateur (120) sont compris dans un système de communication sans fil (100) et adaptés pour échanger des signaux sans fil, le procédé comprenant les étapes suivantes :

envoyer (601) un premier signal à l'équipement d'utilisateur (120),
recevoir (602) un second signal, correspondant au premier signal envoyé, où le second signal a été envoyé depuis l'équipement d'utilisateur (120), en réponse au premier signal envoyé, calculer (603) le temps de propagation aller-retour du signal en mesurant le temps entre le moment où le premier signal est envoyé et celui où le second signal est reçu, et où le procédé est **caractérisé par** :

l'envoi (604) du temps de propagation aller-retour calculé à l'équipement d'utilisateur (120), où l'étape d'envoi (604) du temps de propagation aller-retour calculé est exécutée périodiquement, où l'étape d'envoi (604) du temps de propagation aller-retour calculé est exécutée suivant une certaine périodicité qui est déterminée sur la base d'une propriété contenue dans le groupe suivant : l'importance d'un changement de position de l'équipement d'utilisateur (120), la vitesse de l'équipement d'utilisateur (120) ou une périodicité d'un cycle de réception discontinue, DRX.

2. Procédé selon la revendication 1, dans lequel l'étape d'envoi (604) du temps de propagation aller-retour calculé est exécutée d'une manière déclenchée par un événement.

3. Procédé selon la revendication 1, dans lequel l'événement de déclenchement est une mesure du temps de propagation aller-retour, ou lorsqu'un changement de position de l'équipement d'utilisateur (120) dépasse une certaine valeur seuil.

4. Procédé selon la revendication 1, dans lequel l'étape d'envoi (604) du temps de propagation aller-retour calculé est exécutée d'une manière périodique déclenchée par un événement.

5. Procédé selon la revendication 4, dans lequel l'étape d'envoi (604) du temps de propagation aller-retour calculé est exécutée périodiquement, si une valeur limite seuil est dépassée, et où l'étape d'envoi (604) du temps de propagation aller-retour calculé est exécutée d'une manière déclenchée par un événement si la valeur limite seuil n'est pas dépassée.

6. Procédé selon la revendication 5, dans lequel la valeur limite seuil concerne un paramètre d'équipement d'utilisateur contenu dans le groupe suivant : la différence entre deux mesures du temps de propagation aller-retour, l'importance d'un changement de position de l'équipement d'utilisateur (120) ou la vitesse de l'équipement d'utilisateur (120).

7. Agencement (700) pour une station de base (110) pour établir un positionnement de prise d'empreintes digitales basée sur un équipement d'utilisateur sur la base d'un temps de propagation aller-retour d'un signal envoyé entre la station de base (110) et un équipement d'utilisateur (120), l'équipement d'utilisateur (120) est associé à un point d'emplacement, la station de base (110) et l'équipement d'utilisateur (120) sont compris dans un système de communication sans fil (100) et sont adaptés pour échanger des signaux sans fil, l'agencement (700) comprenant :

une première unité d'envoi (701), adaptée pour envoyer un premier signal à l'équipement d'utilisateur (120), une unité de réception (702), adaptée pour recevoir un second signal, correspondant au premier signal envoyé, lequel second signal a été envoyé depuis l'équipement d'utilisateur (120), en réponse au premier signal, une unité de calcul (703), adaptée pour calculer le temps de propagation aller-retour du signal en mesurant le temps entre le moment où le premier signal est envoyé et celui où le second signal est reçu, et où l'agencement (700) est **caractérisé par** :

une seconde unité d'envoi (704), adaptée pour envoyer le temps de propagation aller-retour calculé à l'équipement d'utilisateur (120), où la seconde unité d'envoi (704) est adaptée pour envoyer le temps de propagation aller-retour calculé suivant une certaine périodicité qui est déterminée sur la base d'une propriété contenue dans le groupe suivant : l'importance d'un changement de position de l'équipement d'utilisateur (120), la vitesse de l'équipement d'utilisateur (120) ou une périodicité d'un cycle de réception discontinue, DRX.

8. Procédé exécuté dans un équipement d'utilisateur (120), pour obtenir le temps de propagation aller-retour d'un signal envoyé entre une station de base (110) et l'équipement d'utilisateur (120), l'équipement d'utilisateur (120) est associé à un point d'emplacement, la station de base (110) et l'équipement d'utilisateur (120) sont compris dans un système de communication sans fil (100) et adaptés pour échanger des signaux sans fil, le procédé comprenant les étapes suivantes :

recevoir (801) un premier signal depuis la station de base (110), envoyer (802) un second signal, correspondant au premier signal reçu, à la station de base (110), en réponse au premier signal reçu, et où le procédé est **caractérisé par** les étapes suivantes :

obtenir (803) le temps de propagation aller-retour du signal, à partir de la station de base (110), où le temps de propagation aller-retour est obtenu suivant une certaine périodicité qui est déterminée sur la base d'une propriété contenue dans le groupe suivant : l'importance d'un changement de position de l'équipement d'utilisateur (120), la vitesse de l'équipement d'utilisateur (120) ou une périodicité d'un cycle de réception discontinue, DRX, et

générer une empreinte digitale sur la base du temps de propagation aller-retour.

9.   Agencement (900) pour un équipement d'utilisateur (120), pour obtenir le temps de propagation aller-retour d'un signal envoyé entre une station de base (110) et l'équipement d'utilisateur (120), l'équipement d'utilisateur (120) est associé à un point d'emplacement, la station de base (110) et l'équipement d'utilisateur (120) sont compris dans un système de communication sans fil (100) et adaptés pour échanger des signaux sans fil, l'agencement (900) comprenant :

une unité de réception (901), adaptée pour recevoir un premier signal depuis la station de base (110),

une unité d'envoi (902), adaptée pour envoyer un second signal, correspondant au premier signal reçu, à la station de base (110), en réponse au premier signal reçu, et où l'agencement (900) est **caractérisé par** :

une unité d'obtention (903), adaptée pour obtenir le temps de propagation aller-retour du signal, à partir de la station de base (110), où l'unité d'obtention (903) est adaptée pour obtenir le temps de propagation aller-retour suivant une certaine périodicité qui est déterminée sur la base d'une propriété contenue dans le groupe suivant : l'importance d'un changement de position de l'équipement d'utilisateur (120), la vitesse de l'équipement d'utilisateur (120) ou une périodicité d'un cycle de réception discontinue, DRX, et

une unité de génération, adaptée pour générer une empreinte digitale sur la base du temps de propagation aller-retour.

100

Fig. 1

100

120

130

PLMN

110-3
BS

110-2
BS

110-4
BS

110-n
BS

110-1
BS

210
GW

110-5
BS

220
PDN

140
Positioning
Node

150
GIS Server

Fig. 2

Fig. 3

| 420 Input device | 425 Output device | |
|---|---|---|

430 Bus

415 Memory

410 CPU

405 Transceiver

120, 130 User equipment

Fig. 4A

120, 130

440

450

445

435

Fig. 4B

Fig. 5

```
            ┌──────────────────────────┐
            │          START           │
            └──────────────────────────┘
                         │
                         ▼
   ┌─────────────────────────────────────────────┐
   │  Send a first signal to a second node.      │
   │                                             │ 601
   └─────────────────────────────────────────────┘
                         │
                         ▼
   ┌─────────────────────────────────────────────┐
   │  Receive a second signal from the second    │
   │  node as a response to the sent first       │
   │  signal.                                    │ 602
   └─────────────────────────────────────────────┘
                         │
                         ▼
   ┌─────────────────────────────────────────────┐
   │  Compute the round trip time of the signal. │
   │                                             │ 603
   └─────────────────────────────────────────────┘
                         │
                         ▼
   ┌─────────────────────────────────────────────┐
   │  Send the computed round trip time to the   │
   │  second node.                               │ 604
   └─────────────────────────────────────────────┘
                         │
                         ▼
            ┌──────────────────────────┐
            │           END            │
            └──────────────────────────┘
```

## Fig. 6

700

701
First
Sending
unit

702
Receiving
unit

703
Computing
unit

704
Second
Sending
unit

110 First node

Fig. 7

Fig. 8

900

**901**
Receiving unit

**902**
Sending unit

**903**
Obtaining unit

**120** Second node

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1209938 A
- WO 0189254 A

- EP 1641302 A
- KR 20020058613

### Non-patent literature cited in the description

- Adaptive Enhanced Cell-ID Fingerprinting Localization by Clustering of Precise Position Measurements. **WIGREN T.** IEEE TRANSACTIONS ON VEHICULAR TECHNOLOGY. IEEE SERVICE CENTER, 01 September 2007, vol. 56, 3199-3209